(19) **Europäisches Patentamt**

**European Patent Office**

**Office européen des brevets**

(11) **EP 1 550 984 A2**

(12) **EUROPEAN PATENT APPLICATION**

(43) Date of publication:
06.07.2005 Bulletin 2005/27

(51) Int Cl.$^7$: **G06T 15/50**

(21) Application number: 04257968.0

(22) Date of filing: 20.12.2004

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **31.12.2003 US 751328**

(71) Applicant: **Pacific Data Images Llc**
**Redwood City, California 94063 (US)**

(72) Inventors:
• **Xie, Feng**
**Half Moon Bay, California 94019 (US)**
• **Wexler, Daniel**
**Soda Springs, California 95728 (US)**

(74) Representative:
**McLeish, Nicholas Alistair Maxwell et al**
**Boult Wade Tennant**
**Verulam Gardens**
**70 Gray's Inn Road**
**London WC1X 8BT (GB)**

(54) **Integrating particle rendering and three-dimensional geometry rendering**

(57)  Images from geometry renderers and particle renderers are composited by incorporating geometry information from the geometry image as a number of special cutout particles in the particle renderer. Instead of contributing to the color and opacity of pixels in the particle-rendered image, these cutout particles occlude or subtract from the accumulated color and opacity of those pixels. In this way, depth resolution is performed as part of the particle rendering process, and the geometry and particle images may be combined using a simple process such as alpha blending. In one embodiment, the cutout particles are obtained from a depth map associated with the geometry image.

Fig. 1

**Description**

**BACKGROUND**

Field of the Invention

The invention relates generally to computer graphics animation, and in particular, to compositing images from particle and geometry renderers.

Background of the Invention

In the computer animation industry, images of three-dimensional scenes are often created by first constructing a three-dimensional model of the scene using modeling software. Based on the three-dimensional model, the modeling software creates surfaces for the objects in the scene by combining a number of polygons of appropriate size and shape to form the objects' surfaces. Colors are then applied to the objects by mapping a texture to these polygons. While the three-dimensional geometry-based technique works well for solid objects, it does not perform as well when used to animate fuzzy and/or soft objects that have rich detail. Such objects are often found in nature and include fire, grass, trees, and clouds.

Particle systems were therefore developed for animating these types of objects. As described in William T. Reeves, "Particle Systems: Techniques for Modeling a Class of Fuzzy Objects," Computer Graphics, Vol. 17, No. 3, p. 359-76 (1983), a particle renderer models an object as a set of particles (i.e., a particle system), where each particle has a set of properties that can change over time. The properties of the particles and the way those properties change are usually modeled as stochastic variables. The appearance of an object modeled with particles is thus determined by selecting the rules that govern their properties. For example, a fire may be modeled as a set of particles that are generated at a random position on a surface, move generally upward while changing color from yellow to red, and then extinguish after a predetermined amount of time. In this way, an animator can describe the fire in terms of its behavior, leaving the particle renderer to determine the specifics of the each particle that makes up the fire.

Because a typical scene in a movie may have some objects that are best modeled using geometry-based renderers and other objects that are best modeled using particle systems, there exists a need to render portions of the image with the different types of renderers and then composite the partial images into a single image. But compositing the image generated from the particle renderer with the image generated from the geometry renderer can be difficult. The traditional solution to this problem is three-dimensional image compositing, described in Tom Duff, "Compositing 3-D Renderer Images," Siggraph'85, Vol. 19, No. 3, p. 41-44. This solution, however, may lead to aliasing around the silhouette of the image being composited, and it lacks support for motion blur and depth of field.

**SUMMARY OF THE INVENTION**

Accordingly, the invention provides computer-implemented methods and systems for compositing images from geometry renderers and particle renderers. The compositing is accomplished by incorporating geometry information from the geometry image as a number of special particles used by the particle renderer. But instead of contributing to the color and opacity of pixels in the particle-rendered image, these special particles occlude or subtract from the accumulated color and opacity of those pixels. In this way, depth resolution is done as part of the particle rendering process, and the geometry and particle images can be easily combined, for example, by alpha blending. In addition, because objects in the geometry image are treated as a number of particles, this method facilitates motion blur and depth of field effects, which are more easily computed for particles than for complex geometrical objects. Moreover, the aliasing problem can be solved by sampling the geometry image to obtain the special particles at a finer resolution than the pixel resolution of the image.

In one embodiment of the invention, a computer-implemented method, system, or computer program product animates an image based on a scene description that includes one or more geometric objects and one or more particle systems. A plurality of cutout particles that correspond to geometric objects in the scene description are generated and then used in the particle rendering to generate a particle image. In the particle rendering, particles of the particle systems have coloring effects on at least one pixel of the particle image that tends to accumulate color for the pixel, whereas cutout particles have occluding effects that tend to block any accumulated color for the pixel. Once the particle and geometric images are computed, they are composited to create a composited image.

In another embodiment of the invention, the cutout particles are generated using a depth map for the geometry image. The depth map is obtained, for example, from the rendering of the geometric image. Because the depth map includes a plurality of entries that each indicate a distance to a nearest geometric object from a camera position in a particular direction, the cutout particles can be generated from the entries in the depth map, where each cutout particle corresponds to an entry in the depth map in three-dimensional space. In another embodiment, at least a portion of the depth map has a higher resolution than the particle image. Alternatively, the cutout particles are generated by sampling at a higher resolution than the particle image to avoid aliasing problems. To conserve computing resources, these super sampling methods can be performed only in areas where aliasing is likely to occur, such as along any silhouette edges of the depth map.

In another embodiment, a particle renderer computes a list of coverage layers for each of a plurality of pixel in the particle image. The coverage layer list comprises one or more coverage layers, where each coverage layer indicates an accumulated color value for the pixel due to one or more particles of a particle system and an amount occluded of the accumulated color by one or more cutout particles. The particle renderer then determines the color of the pixels based on their associated coverage layer list.

## BRIEF DESCRIPTION OF THE DRAWINGS

FIG. 1 is a diagram of the rendering and compositing system in accordance with an embodiment of the invention.

FIG. 2 is a flow chart of a process for generating a plurality of cutout particles in accordance with an embodiment of the invention.

FIG. 3 is a flow chart of a process for rendering in a particle system in accordance with an embodiment of the invention.

FIG. 4 is a flow chart of an embodiment of the compositing operation 360 shown in FIG. 3.

FIG. 5 is a diagram of a coverage layer list, as used in an embodiment of the particle rendering process.

## DETAILED DESCRIPTION OF THE PREFERRED EMBODIMENTS

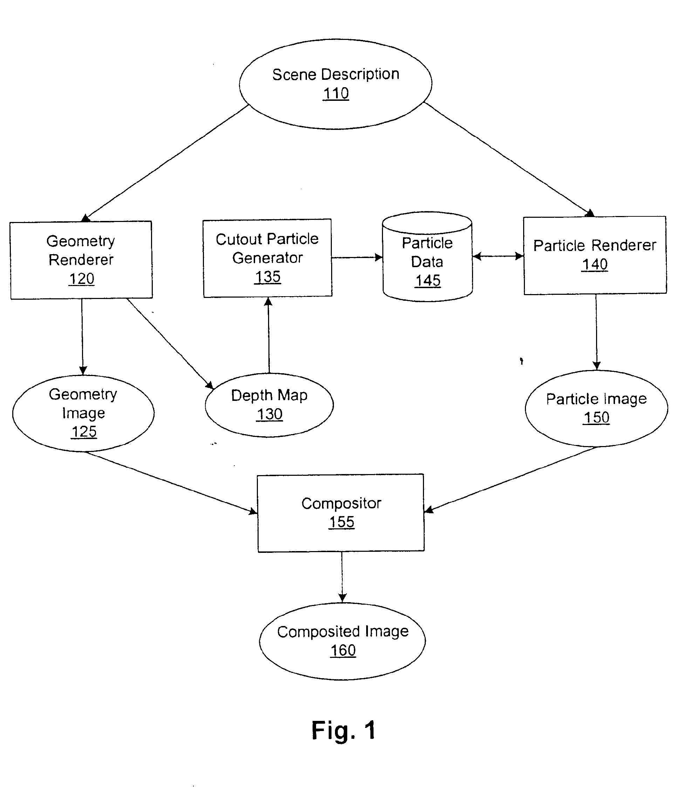

In computer animation, an animator will use various tools and methods for modeling objects in a scene and then render the images that make up the scene. The systems and methods described herein can be used, for example, when an animator desires to model some of the objects in the scene as geometric shapes and other objects as systems of particles. Accordingly, FIG. 1 illustrates a system for rendering geometry images and particle images and then compositing the images, in accordance with an embodiment of the invention. The system comprises a geometry renderer 120, a particle renderer 140, and a compositor 155, each of which can be implemented on one or more computer systems. Geometry and particle renderers are well known in the computer animation industry, and any of a variety of renderers can be used in connection with the invention. Moreover, any of the embodiments described herein or any portions thereof can be implemented in software, specialty hardware, or a combination of the two, without limitation.

Using three-dimensional modeling tools, an animator generates a scene description 110 for a computer-animated scene, which comprises one or more images in a series. The scene description 110 includes a description of a number of objects in the scene. Some of the objects may be modeled as geometric objects, and others as particle systems. Accordingly, to be rendered into a series of images, the objects in the scene are rendered or otherwise created separately and then are combined into a single image. In the embodiment shown in FIG. 1, information about the geometric objects from the scene description 110 is passed to the geometry renderer 120, and information about the particle systems from the scene description 110 is passed to the particle renderer 140. The scene description 110 also includes and passes to each renderer information about the camera, the light sources in the scene, and any other information needed by the corresponding renderer to create a two-dimensional image of the scene.

Using the geometry model and camera data from the scene description 110, the geometry renderer 120 creates an image 125 of the geometry-modeled objects in the scene. Similarly, using the particle system data and camera data from the scene description 110, the particle renderer 140 creates an image 150 of the particles systems in the scene. To create a composited image 160 that includes the geometry and particle-based objects, therefore, the geometry image 125 and particle image 150 are passed to a compositor 155. The compositor 155 combines these images to form the composited image 160. This compositing step is simplified relative to existing three-dimensional image compositing methods because depth resolution is performed as part of the particle rendering process rather than the compositing process. In this way, the compositor 155 can use simple compositing methods, such as alpha blending, and thus avoid the complexity and technical limitations of the three-dimensional image compositing methods described in the background.

FIG. 1 illustrates one embodiment of a system in which depth resolution is performed as part of the particle rendering process. In addition to the geometry image 125, the geometry renderer 120 generates a depth map 130 of the image 125. The depth map 130 includes a two-dimensional array of depth values, each depth value corresponding to a distance from the camera to the nearest geometry object in the scene. The depth map 130 is passed to a cutout particle generator 135, which generates special cutout particles for the particle renderer 140. These cutout particles are stored in a particle database 145 along with the normal particles used in the particle rendering process.

Rather than contributing to the color and opacity of pixels in the particle-rendered image 140, like normal particles in a particle system, these special cutout particles occlude or subtract from the accumulated color and opacity of those pixels. The resulting particle image 150 represents a two-dimensional image of the particle-based objects in the scene that has been occluded as necessary by any geometry-based objects that are in the geometry image 125 and closer to the camera. In this way, the cutout particles are used during the particle rendering process to perform depth resolution, as these cutout particles effectively block portions of the particle objects in the particle image 150. The composited image 160 can then be obtained by blending the particle image 150 over the geometry image 125.

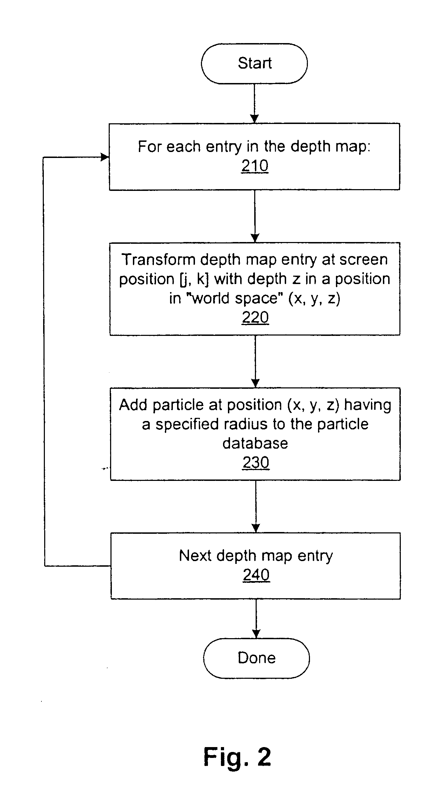

FIG. 2 illustrates one embodiment of a method for generating the cutout particles. In connection with the system shown in FIG. 1, this method can be performed by the cutout particle generator 135. As described above, the depth map 130 comprises a set of entries, each entry corresponding to a pixel in a two-dimensional array of pixels as seen from the camera. Each entry in depth map 130 contains the distance from the camera to the nearest geometric object through the corresponding pixel. For optimization and resource conservation purposes, however, the depth map 130 need not be fully populated and may contain depth information for only a portion of the pixels in the geometry image 125. Using the depth map 130, the cutout particle generator 135 generates a plurality of cutout particles that correspond to the position of the entries in the depth map, and thus to the nearest occluding geometry objects in the scene.

In one embodiment, for 210 each entry in the depth map 130, the cutout particle generator 135 transforms 220 the entry from "screen space" into a position in "world space." In screen space, the entry is represented by a position [j, k] in the depth map 130 and its depth value. The screen space is defined by the camera information; therefore, using a three-dimensional transformation for the camera, the position of the particle in world space [x, y, z] that corresponds to the depth map entry is determined.

The cutout particle generator 135 then adds 230 a special cutout particle at this determined position [x, y, z]. In one embodiment, the added cutout particle has a radius that is half the distance between depth map entries, corresponding to its area in the depth map 130. For example, if the depth map 130 has the same resolution as the geometry image 125, the radius of the added cutout particle would be one half the length of a pixel in the image 125. In another example, if the depth map is sampled 2x2 for every pixel in the geometry image 125, the added cutout particles would have a radius of one quarter the length of the pixels in the image 125. The transforming 220 and adding 230 of cutout particles are then repeated 240 for the remaining entries in the depth map 130. Accordingly, this process results in a number of cutout particles that correspond to the surface of the nearest geometry objects in the scene.

Alternatively, or in addition to the process describe above, the cutout particle generator 135 can generate a set of cutout particles using various techniques. For example, depth maps of different resolutions can be used. To avoid aliasing problems, for example, the system can use a depth map with finer resolution than the geometry image 125 (e.g., "super sampling"). Alternatively, the system may adaptively super sample to generate cutout particles only in areas where aliasing is likely to occur, such as near a compositing border or along the silhouette edges of the depth map 130. This helps to conserve memory and processing resources of the graphics system. In another alternative, rather than using the grid structure of a depth map, the system may sample depths of geometry objects in the scene using from the camera perspective methods such as ray tracing. The samples are then converted into world space using the camera transformation and added as cutout particles.

Once the cutout particles and normal particles are generated for an image, the particle renderer 140 uses the cutout particles and the normal particles to render the particle image 150. The input to the particle renderer 140 includes the cutout particles and the normal particles. Each of the cutout particles has at least a position and a radius. In addition, the cutout particles may have an associated opacity, which can be adjusted by the renderer 140 to tune the amount of occlusion by the cutout particles (e.g., in the case of motion blur and depth of field effects). The normal particles each have a number of characteristics, such as position, radius, velocity, color, opacity, and render mode. The cutout particles and normal particles are provided to the particle renderer 140 in a list.

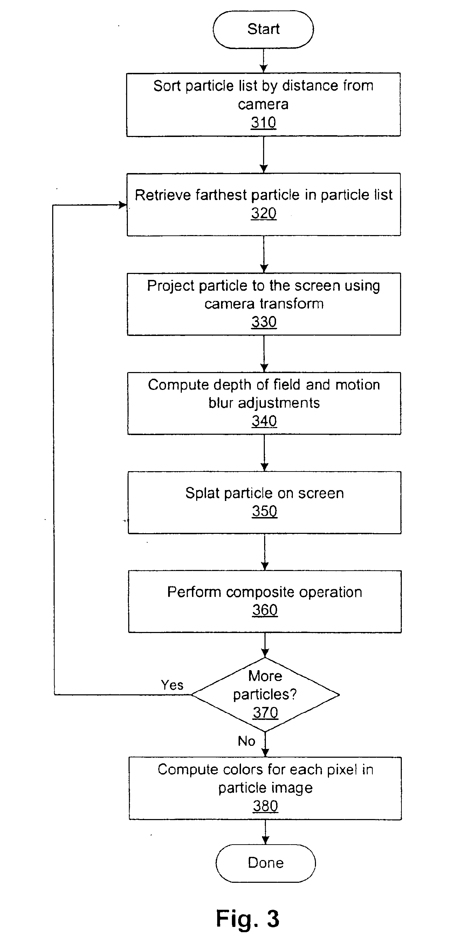

FIG. 3 illustrates the particle rendering process in accordance with an embodiment of the invention. In an initial step, the list of particles is sorted 310 by their distance from the camera. The renderer 140 then retrieves 320 the farthest particle in the list. Compositing the normal and cutout particles in this order, from back to front, greatly simplifies the depth resolution of the scene. For each particle retrieved, the particle renderer 140 projects 330 the particle onto the screen using the camera transform. In this example, the screen is the image space in which the particle image 150 is rendered as seen from the camera's perspective. The projected particle is thus represented in screen space, having coordinates on the screen and parameters (such as radius and velocity) converted into the form as seen by the camera.

After the particle is projected 330 onto the screen, the renderer 140 computes 340 any motion blur and depth of field adjustments desired for the particle. The depth of field adjustment is typically performed before the motion blur adjustment. The effect of the depth of field adjustment is to change the radius of the particle to simulate the effect of focus (or lack thereof) in normal cameras. The effect of the motion blur adjustment is to simulate the blurry or streaked appearance of a moving object as captured by a camera. The effect is achieved by converting the particle into a series of particles along a line or a curve from the previous frame's position to the present frame's position. The opacity of the particle is also adjusted for the depth of field and motion blur effects to conserve color energy (or color intensity).

Depth of field and motion blur can be performed for cutout particles as well as normal particles. It is noted that, like depth maps, velocity maps are produced by a typical geometry renderer 120. While the depth map 130 provides the camera distance to objects through each pixel, a velocity map provides a two-dimensional screen velocity of each pixel in the image. This greatly facilitates the motion blur adjustment, which requires computation of a particle's screen velocity. For normal particles moving in three-dimensional space, the screen velocity is calculated using camera transformations to locate a starting and ending position of the particle on the screen. For cutout particles, however, this velocity is already known, as it is given in the corresponding entry of the velocity map. Using the velocity map, therefore, the particle renderer 140 can avoid having to perform the computationally expensive camera transformation on cutout particles when computing a motion blur adjustment.

The particle is then splatted 350 onto the screen based on the selected rendering mode. Various rendering modes, such as quadric (or spot), box, and Gaussian, are well known in the art, and the particle rendering mode used can be selected by the animator for the appropriate effect. In one embodiment, the cutout particles use the box render mode (where the size of the box is equal to the size of a pixel in the depth map, for one-to-one sampling) so that they full occlude any normal particles behind them. The output of the splatting 350 process is the amount that the particle overlaps each pixel, if at all. This amount is often referred to as the particle's weighted coverage, or weight, for a particular pixel, and can be expressed as a fraction between 0 and 1, inclusive.

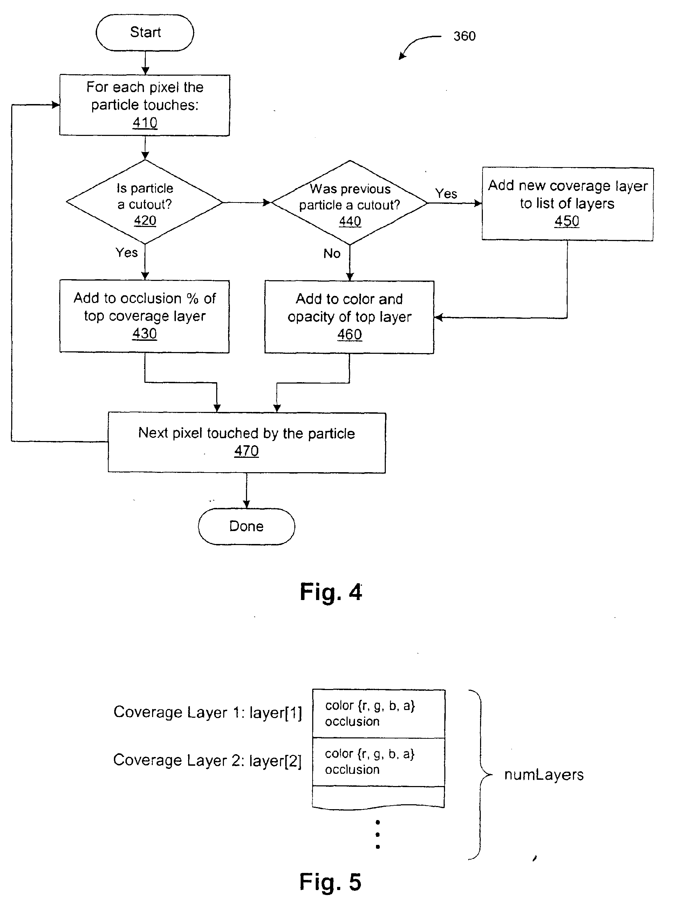

Once the particle has been projected, adjusted, and splatted, the renderer performs 360 the composite operation. During this compositing operation 360 (illustrated in more detail in FIG. 4), the renderer 140 determines the particle's contribution to the color and opacity of each pixel that the particle overlaps. In the case of normal particles, the particle's color and opacity is added to the pixels overlapped by the particle. In the case of cutout particles, an amount of each pixel's color and opacity occluded by the particle is determined. Because the particles are processed from the farthest to the nearest particle, the compositing operation accounts for resolution of the relative depths of the normal and cutout particles.

In one embodiment, each or a plurality of pixels in the particle image 150 is associated with a list of coverage layers. Illustrated in FIG. 5, a list of coverage layers includes one or more ordered coverage layers. Each coverage layer includes at least two pieces of information: (1) an accumulated color (including opacity) due to contributions from normal particles, and (2) an occlusion amount due to cutout particles. Accordingly, the list of coverage layers for a pixel describes the combined coloring and effects of the normal particles and the occluding effects of the cutout particles on the pixel. Because the layers are generated in order, the color of a pixel can be determined from the pixel's list of coverage layers. The list of coverage layers is populated during the compositing operation step 360 of the particle rendering process. As FIG. 3 illustrates, this step 360 is repeated for each of the particles in the particle list. One embodiment of the compositing operation step 360 is shown in FIG. 4.

For a current particle being processed in the particle rendering process (shown in FIG. 3), the composite operation 360 populates the coverage layer list for 410 each pixel on the particle image 150 that the particle overlaps. If 420 the particle is a cutout particle, the particle's effect on the appearance of the pixel is to occlude any accumulated color for the pixel. Therefore, the occlusion amount in the top coverage layer for the pixel is added 430 to any existing occlusion amount in the top coverage layer. In one embodiment, the new occlusion amount is determined according to the equation:

layer[0].occlusion += (particle.w * particle.color.a); where the cutout particle has an opacity given by particle. color.a and a weight given by particle.w (the weight being the amount of the pixel that the particle covers). In one embodiment, the maximum allowed occlusion amount is 1. In another embodiment, the coverage layer is ignored once its occlusion amount reaches or exceeds 1, since the accumulated color associated therewith is completely occluded by other objects.

If there is no accumulated color for the pixel, step 430 may be skipped because occluding such a pixel would have no effect on its color. In addition, the additional occlusion can be added 430 to the occlusion amount of the top coverage layer only, or it can be added to the occlusion amounts of each of the existing coverage layers. In the former case, the actual occlusion of a coverage layer would have to be computed based on its occlusion amount and the occlusion amount of higher level coverage layers; however, this also saves processing time during the composite operation step 360 because it avoids having to update the occlusion amount of all coverage layers.

On the other hand, if 420 the particle is a normal particle, its coloring effect should be added to the color of the pixel. However, there are at least two possible scenarios. If 440 the previous particle was not a cutout particle, it can simply be added 460 to the accumulated color of the top coverage layer. In one embodiment, if the particle has an opacity of particle.color.a and a weight of particle.w, the new accumulated color is determined according to the equation:

layer[0].color.r += particle.w * particle.color.a * (particle.color.r - layer[0].color.r);

for the color red, and similarly for the other colors green and blue. The accumulated opacity for the layer's color is determined according to the equation:

layer[0].color.a += particle.w * particle.color.a * (1-layer[0].color.a);

If 440 the previous particle was a cutout particle, the top coverage layer would indicate an occlusion amount. But the particle cannot be added to this coverage layer because it cannot be occluded by any previously-processed cutout particles, which are necessarily farther from the camera than the current particle. Accordingly, a new coverage layer is added 450, the layer's color and occlusion values are initialized to 0, and then the particle's color is added 460 to this new top coverage layer as described above. This process is then repeated 470 for any additional pixels touched by the particle.

Various methods can be used to create and store the coverage layers in memory. For software implementations, a coverage layer list that creates and adds entries on demand may be the most memory efficient solution. In a hardware implementation, a regular pre-allocated array of images where each image represents a separate coverage layer may be the most efficient solution.

After all the particles are processed in the particle rendering stage (e.g., shown in FIG. 3), at least some of the pixels in the particle image 140 are associated with a list of one or more coverage layers. The particle renderer 140 uses the list of coverage layers for each pixel to compute 380 the color and opacity for the pixel. This is done by computing the color contributions of each coverage layer as affected by the occlusion amount associated with the layer. In one embodiment, the red component of the pixel color, pixel.color.r, and the opacity component, pixel.color. a, are computed using the following computer code:

```
pixel.color.r = 0;
for (int j = numLayers; j > 0 ; j--) {
        pixel.color.r = (1 - layer[j].occlusion) *
               (layer[j].color.r  + ((1 - layer[j].color.a) *
               pixel.color.r));
        ...
        pixel.color.a = (1 - layer[j].occlusion) *
               (layer[j].color.a  + ((1 - layer[j].color.a) *
               pixel.color.a));
};
```

where the number of coverage layers is given by numLayers. The green and blue components of the pixel color can be computed with code similar to that for the red component (e.g., with code replacing the ellipsis).

Once the pixel color is computed for each of a plurality of pixels in the particle image 150, the particle image 150 and the geometry image 125 can be composited by the compositor 155. Because depth resolution was performed in the particle rendering stage, the particle image 150 and the geometry image 125 can be composited using simple alpha blending. In one embodiment, the images 125 and 150 are composited on a pixel-by-pixel basis. Accordingly, a pixel at location [j, k] in the geometry image, geometry_image[j, k], is blended with the corresponding pixel in the particle image, particle_image[j, k], according to the equation:

final_image[j,k].r = particle_image[j,k].r + ((1 - particle_image[j,k].a) * geometry_image[j,k].r);

to obtain the red component of the color of the pixel [j, k] of the composited image 160. The green and blue components of the colors for the pixel are similarly obtained. Also, similarly, the opacity component is obtained by:

final_image[j,k].a = particle_image[j,k].a + ((1 - particle_image[j,k].a) * geometry_image[j,k].a);

however, persons skilled in the art will recognize that these equations can be adjusted to implement various effects.

The foregoing description of the embodiments of the invention has been presented for the purposes of illustration and description. It is not intended to be exhaustive or to limit the invention to the precise forms disclosed. Persons skilled in the relevant art can appreciate that many modifications and variations are possible in light of the above teaching. It is therefore intended that the scope of the invention be limited not by this detailed description, but rather by the claims appended hereto.

**Claims**

1.    A computer-implemented method for animating an image based on a scene description that includes one or more geometric objects and one or more particle systems, the method comprising:

    generating a plurality of cutout particles, each cutout particle corresponding

        to a geometric object in the scene description;
        rendering the particle systems with the cutout particles to generate a particle image, wherein at least some cutout particles occlude particles of the
        particles systems; and
        compositing the particle image with an image of the geometric objects to create a composited image.

2.    The method of claim 1, wherein generating a plurality of cutout particles comprises:

    rendering the geometric objects to produce a depth map, the depth map including a plurality of entries that each indicate a distance to a nearest geometric object from a camera position in a particular direction; and
    generating cutout particles from at least some of the entries in the depth map, each cutout particle corresponding to an entry in the depth map in three-dimensional space.

3.    The method of claim 2, wherein the cutout particles are generated at a higher resolution than the particle image.

4.    The method of claim 2, wherein the cutout particles are generated at a higher resolution than the particle image along any silhouette edges of the depth map.

5.    The method of claim 1, wherein generating a plurality of cutout particles comprises sampling the geometric objects at a higher resolution than the particle image at least in areas where aliasing is likely to occur.

6.    The method of claim 1, wherein the rendering comprises:

    for at least some of the particles of the particle systems and at least some of the cutout particles, performing a compositing operation to determine a coloring or an occluding effect of the particle on one or more pixels of the particle image.

7.    The method of claim 6, wherein the compositing operation is performed for the particles from the farthest particle from a camera position to the nearest particle.

8.    The method of claim 6, wherein the particles of the particle systems have coloring effects on at least one pixel of the particle image and the cutout particles have occluding effects on at least one pixel of the particle image, a coloring effect tending to accumulate color for the pixel and an occluding effect tending to block any accumulated color for the pixel.

9.    The method of claim 1, wherein the rendering comprises:

    combining the particles from the particle systems and the cutout particles into a list;
    sorting the list by each particle's distance from a camera position; and
    for each particle in the list, from the farthest to the nearest, determining a coloring or an occluding effect of the particle on one or more pixels of the particle image.

10.  The method of claim 1, wherein the rendering comprises:

combining the coloring effects of the particles of the particle systems and the occluding effects of the cutout particles to determine the color for a plurality of pixels in the particle image.

11. The method of claim 1, wherein the rendering comprises:

a step for resolving the coloring effects of the particles of the particle systems and the occluding effects of the cutout particles based on the depth of the associated particles.

12. The method of claim 1, wherein the compositing comprises alpha blending the particle image with a rendered image of the geometric objects.

13. The method of claim 1, wherein the rendering comprises:

for each particle, determining which pixels in the particle image the particle covers and an amount of the pixel covered, as seen from a camera position.

14. The method of claim 13, wherein the rendering comprises:

computing a depth of field adjustment for a cutout particle.

15. The method of claim 13, wherein the rendering comprises:

computing a motion blur adjustment for a cutout particle.

16. A computer-implemented method for rendering one or more particle systems to produce a particle image to be combined with a second image, the method comprising:

generating a plurality of cutout particles associated with a three-dimensional position of objects in the second image;
for each of a plurality of pixels in the particle image, computing a list of coverage layers for the pixel, where each coverage layer in the list of coverage layers indicates an accumulated color value due to one or more particles of a particle system and an amount occluded by one or more cutout particles; and
determining the color of the pixels based on their associated coverage layer list.

17. The method of claim 16, wherein each list of coverage layers is generated by processing the particles in order from farthest from a camera position to nearest.

18. The method of claim 17, wherein computing a list of coverage layers for a pixel comprises:

adding a new coverage layer for a particle from a particle system that follows a cutout particle in the processing.

19. The method of claim 16, wherein generating the cutout particles comprises:

computing a depth map for the second image; and
generating a cutout particle for at least some entries in the depth map, each cutout particle being having a position in three-dimensional space corresponding to the depth map entry.

20. The method of claim 19, wherein at least portions of the depth map have a higher resolution than the particle image.

21. The method of claim 16, wherein the cutout particles are generated at a higher resolution than the particle image.

22. The method of claim 16, wherein generating a plurality of cutout particles comprises sampling geometric objects in the second image at a higher resolution than the particle image at least in areas where aliasing is likely to occur.

23. A computer program product comprising a computer-readable medium containing computer program code for performing any one of the methods of claims 1 through 22.

24. A system for animating an image based on a scene description that includes one or more geometric objects and one or more particle systems, the system comprising:

a geometry renderer for rendering the geometric objects in the scene description to generate a geometry image;

a cutout particle generator that generates a plurality of cutout particles, each cutout particle corresponding to a geometric object in the scene description;

a particle renderer for rendering the particle systems of the scene description and the cutout particles to generate a particle image, wherein at least some cutout particles occlude particles of the particles systems; and

a compositor that combines the geometric image and the particle image to form a composited image.

25. The system of claim 24, wherein the geometry renderer generates a depth map for the geometric objects in the scene description, and the cutout particle generator generates the cutout particles based on the depth map.

26. The system of claim 25, wherein the cutout particle generator generates the cutout particles at a higher resolution than the particle image at least in areas where aliasing is likely to occur.

27. The system of claim 24, wherein the particle renderer processes the particles from the farthest particle from a camera position to the nearest particle.

28. The system of claim 24, wherein the particle renderer is configured to:

combine the particles from the particle systems and the cutout particles into a list;

sort the list by each particle's distance from a camera position; and

for each particle in the list, from the farthest to the nearest, determine a coloring or an occluding effect of the particle on one or more pixels of the particle image.

29. The system of claim 24, wherein the particle renderer is configured to combine the coloring effects of the particles of the particle systems and the occluding effects of the cutout particles to determine the color for a plurality of pixels in the particle image.

30. The system of claim 24, wherein for each of a plurality of pixels in the particle image, the particle renderer computes a list of coverage layers for the pixel, where each coverage layer in the list of coverage layers indicates an accumulated color value due to one or more particles of a particle system and an amount occluded by one or more cutout particles.

31. The system of claim 24, wherein the compositor alpha blends the particle image and the geometry image to form the composited image.

Scene Description
110

Geometry
Renderer
120

Cutout Particle
Generator
135

Particle
Data
145

Particle Renderer
140

Geometry
Image
125

Depth Map
130

Particle Image
150

Compositor
155

Composited Image
160

# Fig. 1

Start

For each entry in the depth map:
210

Transform depth map entry at screen
position [j, k] with depth z in a position
in "world space" (x, y, z)
220

Add particle at position (x, y, z) having
a specified radius to the particle
database
230

Next depth map entry
240

Done

# Fig. 2

Start

Sort particle list by distance from
camera
310

Retrieve farthest particle in particle list
320

Project particle to the screen using
camera transform
330

Compute depth of field and motion
blur adjustments
340

Splat particle on screen
350

Perform composite operation
360

More
particles?
370

Yes

No

Compute colors for each pixel in
particle image
380

Done

Fig. 3

Start

For each pixel the
particle touches:
410

Is particle
a cutout?
420

Was previous
particle a cutout?
440

Yes

Add new coverage layer
to list of layers
450

Yes

No

Add to occlusion % of
top coverage layer
430

Add to color and
opacity of top layer
460

Next pixel touched by the particle
470

Done

360

**Fig. 4**

Coverage Layer 1: layer[1]

color {r, g, b, a}
occlusion

Coverage Layer 2: layer[2]

color {r, g, b, a}
occlusion

numLayers

**Fig. 5**